# EUROPÄISCHE PATENTSCHRIFT

(11) **EP 1 642 412 B1**
(45) Veröffentlichungstag und Bekanntmachung des Hinweises auf die Patenterteilung: **10.01.2007**
(21) Anmeldenummer: 04740702.8
(22) Anmeldetag: 06.07.2004
(51) Int. Cl.: H04L 9/08, G06F 7/58

(54) **VERFAHREN ZUR VERSCHLÜSSELTEN DATENÜBERTRAGUNG ÜBER EIN KOMMUNIKATIONSNETZ**
METHOD FOR ENCRYPTED DATA TRANSMISSION VIA A COMMUNICATION NETWORK
PROCEDE POUR UNE TRANSMISSION DE DONNEES CHIFFREES A TRAVERS UN RESEAU DE COMMUNICATION

(30) Priorität: 07.07.2003 DE 10330643
(43) Veröffentlichungstag der Anmeldung: 05.04.2006
(73) Patentinhaber: SIEMENS AKTIENGESELLSCHAFT, 80333 München (DE)
(72) Erfinder: DÖBRICH, Udo, 76307 Karlsbad (DE); HEIDEL, Roland, 76870 Kandel (DE); LINZENKIRCHNER, Edmund, 76344 Eggenstein-Leopoldshafen (DE)
(86) Internationale Anmeldenummer: PCT/EP2004/007378
(87) Internationale Veröffentlichungsnummer: WO 2005/004381

(56) Entgegenhaltungen:
- WO-A-97/49213
- WO-A-99/31843
- WO-A-02/063462
- US-A- 5 768 372
- US-A1- 2002 034 300

## Beschreibung

Die Erfindung betrifft ein Verfahren zur verschlüsselten Datenübertragung, sowie ein entsprechendes Computerprogrammprodukt und ein Kommunikationssystem, insbesondere für die Teilnehmer eines Automatisierungssystems.

Aus dem Stand der Technik sind verschiedene Verfahren zur verschlüsselten Datenübertragung bekannt. Grundsätzlich unterscheidet man hierbei zwischen asymmetrischen und symmetrischen Verschlüsselungsverfahren.

Symmetrische Verschlüsselungsverfahren werden auch als "Private Key"-Verschlüsselung bezeichnet. Bei einer symmetrischen Verschlüsselung haben die Teilnehmer an der Kommunikation denselben geheimen Schlüssel, der sowohl für die Verschlüsselung als auch für die Entschlüsselung dient. Beispiele für aus dem Stand der Technik bekannte symmetrische Verschlüsselungsverfahren sind DES, Triple-DES, RC2, RC4, IDEA, Skipjack.

Ein gemeinsamer Nachteil von aus dem Stand der Technik bekannten symmetrischen Verschlüsselungsverfahren ist, dass vor Beginn der verschlüsselten Kommunikation die symmetrischen Schlüssel zu den einzelnen Teilnehmern übertragen werden müssen, wobei diese Übertragung ausgespäht werden kann.

Bei asymmetrischen Verschlüsselungsverfahren, die auch als "Public-Key"-Verschlüsselung bezeichnet werden, dient ein Public-Key zur Verschlüsselung. Die mit dem Public-Key eines Teilnehmers verschlüsselten Daten können nur mit dem geheimen Private-Key dieses Teilnehmers entschlüsselt werden. Bekannte asymmetrische Verschlüsselungsverfahren sind Diffie-Hellmann und RSA.

Aus der Veröffentlichung WO 97/49213 A ist eine Erzeugung eines symmetrischen Schlüssels, der auf aus einem stochastischen Prozess gewonnenen Daten basiert, bekannt. Genauer gesagt offenbart die besagte Veröffentlichung ein Verfahren zur Datenübertragung mit der Eingabe von ersten Daten aus einem stochastischen Prozess in zumindest erste und zweite Teilnehmer eines Kommunikationsnetzes. Danach findet in jedem der zumindest ersten und zweiten Teilnehmer eine Erzeugung eines symmetrischen Schlüssels, basierend auf den ersten Daten und eine Speicherung des symmetrischen Schlüssels für eine verschlüsselte Datenübertragung zwischen den zumindest ersten und zweiten Teilnehmern statt. Das besagte Verfahren zur Etablierung eines gemeinsamen kryptographischen Schlüssels gemäß der besagten Veröffentlichung basiert auf der Annahme, dass die Charakteristik eines Kommunikationskanals, genauer gesagt die Impedanzen des Kanals, bei mobilen Teilnehmern als ein der Schlüsselerzeugung zugrunde liegender stochastischer Prozess genutzt werden kann.

Der Erfindung liegt demgegenüber die Aufgabe zugrunde, ein verbessertes Verfahren zur verschlüsselten Datenübertragung sowie ein entsprechendes Computerprogrammprodukt und Kommunikationssystem für die verschlüsselte Datenübertragung zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird für die geschützte Datenübertragung, beispielsweise über ein öffentliches Kommunikationsnetz wie das Internet, ein symmetrisches Verschlüsselungsverfahren verwendet. Es erfolgt dabei keine Verteilung des geheimen symmetrischen Schlüssels an die einzelnen Teilnehmer des Kommunikationsnetzes, sondern der symmetrische Schlüssel wird in den einzelnen Teilnehmern jeweils lokal erzeugt.

Hierzu werden Daten, die einem stochastischen Prozess entnommen sind, in die einzelnen Teilnehmer eingegeben. Auf dieser Grundlage werden dann in den Teilnehmern jeweils lokal identische symmetrische Schlüssel erzeugt, die im Weiteren für die verschlüsselte Datenübertragung zwischen den Teilnehmern verwendet werden.

Nach einer bevorzugten Ausführungsform der Erfindung werden die Daten, die die Grundlage für die Erzeugung der symmetrischen Schlüssel in den Teilnehmern bilden, mittels eines Zufallszahlgenerators erzeugt, der einen stochastischen Prozess, wie z. B. Widerstandsrauschen oder einen radioaktiven Zerfallsprozess für die Zufallszahlenerzeugung nutzt. Im Vergleich zu auf Generatorpolynomen basierenden Zufallszahlengeneratoren hat ein solcher Zufallszahlengenerator den Vorteil, dass es sich nicht um Pseudo-Zufallszahlen handelt. Das Generatorpolynom kann nämlich prinzipiell durch einen Angreifer durch Auswertung der Kommunikation der Teilnehmer ermittelt werden, insbesondere wenn es sich um zyklische Kommunikation handelt.

Nach einer weiteren bevorzugten Ausführungsform wird mindestens ein Messwert aus einem stochastischen Prozess ermittelt. Beispielsweise werden die für die Erzeugung der symmetrischen Schlüssel benötigten Daten aus den niedersignifikanten Bit-positionen des bzw. der Messwerte gewonnen.

Nach einer weiteren bevorzugten Ausführungsform der Erfindung wird mindestens ein zeitlich veränderlicher Parameter eines Automatisierungssystem als stochastischer Prozess genutzt. Hierfür kommen beispielsweise verschiedene Messwerte, die von Sensoren des Automatisierungssystems geliefert werden, wie z. B. Temperatur, Drehzahl, Spannung, Strom, Durchfluss, Geschwindigkeit, Konzentration, Feuchtigkeit, ... in Frage. Die entsprechenden Messwerte sind stochastisch, können aber beispielsweise periodische Komponenten aufweisen. Zur Reduktion solcher periodischen Komponenten können beispielsweise nur die niedersignifikanten Bitpositionen der Messwerte für die Bildung der symmetrischen Schlüssel herangezogen werden.

Nach einer bevorzugten Ausführungsform der Erfindung werden von zumindest zwei der Teilnehmer unabhängig voneinander stochastische Daten erfasst. Die von einem der Teilnehmer erfassten stochastischen Daten werden an den oder die anderen Teilnehmer übertragen. Insgesamt erhält jeder der Teilnehmer auf diese Art und Weise sämtliche der stochastischen Daten. Diese werden dann miteinander kombiniert, um eine Grundlage für die jeweilige Erzeugung des symmetrischen Schlüssels zu erhalten.

Nach einer weiteren bevorzugten Ausführungsform der Erfindung erfolgt die Übertragung der Daten, die die Grundlage für die symmetrische Schlüsselerzeugung in den Teilnehmern bilden, über ein öffentliches Netz, wie beispielsweise das Internet, oder ein Ethernet, beispielsweise ein LAN, WAN oder WLAN.

Nach einer weiteren bevorzugten Ausführungsform der Erfindung erfolgt die Schlüsselerzeugung in den Teilnehmern auf Anforderung eines Master-Teilnehmers, wobei die entsprechende Anforderung über das Kommunikationsnetz zu den Teilnehmern übertragen wird. Beispielsweise erfolgt eine entsprechende Anforderung dann, wenn die Auslastung des Kommunikationsnetzes mit Nutzdatenübertragung relativ gering ist, um die ungenutzte Bandbreite für die Übertragung von Daten als Grundlage für die Schlüsselbildung in den Teilnehmern zu nutzen. Diese Vorgehensweise ist insbesondere dann vorteilhaft, wenn die Teilnehmer über das Internet kommunizieren.

Wenn dagegen zum Beispiel ein Ethernet verwendet wird, können alle Teilnehmer den Datenverkehr auf dem Ethernet "mithören". In diesem Fall kann die Schlüsselbildung in den einzelnen Teilnehmern so angestoßen werden, dass der Master-Teilnehmer ein entsprechendes Trigger-Kommando auf das Ethernet ausgibt.

Nach einer weiteren bevorzugten Ausführungsform der Erfindung erfolgt die Übertragung der stochastischen Daten und die Schlüsselerzeugung in den Teilnehmern zu vorbestimmten Zeitpunkten oder nach vorbestimmten Zeitintervallen. In dieser Ausführungsform verfügen die Teilnehmer des Kommunikationsnetzes über eine synchrone Zeitbasis.

Nach einer weiteren bevorzugten Ausführungsform der Erfindung werden verschiedene symmetrische Verschlüsselungsverfahren von den Teilnehmern zur Schlüsselerzeugung verwendet und entsprechende unterschiedliche symmetrische Schlüssel erzeugt. Für die verschlüsselte Datenübertragung wird beispielsweise periodisch zwischen den Verschlüsselungsverfahren umgeschaltet, um die Sicherheit der verschlüsselten Datenübertragung weiter zu erhöhen.

Nach einer weiteren bevorzugten Ausführungsform der Erfindung werden die Daten für die verschiedenen Verschlüsselungsverfahren durch unterschiedliche Kombinationen der von den einzelnen Teilnehmern gelieferten stochastischen Daten gebildet.

Von besonderem Vorteil ist die vorliegende Erfindung zur Anwendung bei Automatisierungssystemen. Beispielsweise können die Algorithmen zur Schlüsselbildung in den einzelnen Teilnehmern bei der Projektierung der Anlage festgelegt werden. Die entsprechenden Algorithmen zur Schlüsselbildung werden von dem Hersteller der Anlage geheim gehalten. Neben dem Schutz der verschlüsselten Datenübertragung ist damit auch ein Schutz gegen die Benutzung nicht autorisierter Komponenten, beispielsweise von einem Dritthersteller, in dem Automatisierungssystem gegeben.

Vorzugsweise werden die Algorithmen in geschützten Speicherbereichen der Automatisierungsgeräte des Automatisierungssystems gespeichert, z.B. in EPROMs oder Chipkarten, die von authorisierten Nutzern in Kartenleser der Automatisierungsgeräte eingeführt werden.

Besonders vorteilhaft ist die Anwendung der vorliegenden Erfindung für über öffentliche Netze miteinander verknüpfte Komponenten automatisierungstechnischer Anlagen. Durch die erfindungsgemäße verschlüsselte Datenübertragung zwischen den Teilnehmern einer solchen automatisierungstechnischen Anlage werden unbefugte Eingriffe Dritter vermieden, insbesondere auch dann, wenn eine drahtlose Übertragungstechnik zwischen den Teilnehmern verwendet wird.

Nach einer weiteren bevorzugten Ausführungsform der Erfindung wird die verschlüsselte Datenübertragung für die Zwecke der Fernwartung oder des so genannten Teleservice der Anlage verwendet. Auch hier bietet das erfindungsgemäße Datenübertragungsverfahren einen Schutz gegen Ausspähung der übertragenen Anlagendaten bzw. manipulierende Eingriffe.

Neben einer automatisierungstechnischen Anlage kann die Erfindung vorteilhaft auch für die Zwecke der Telekommunikation zwischen Teilnehmern oder für die Zwecke der Kommunikation zwischen den Komponenten einer Kraftfahrzeug-, Schiffs-, Flugzeug- oder Eisenbahnelektronik verwendet werden.

Im Weiteren werden bevorzugte Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Kommunikationssystems,
- Figur 2: ein Flussdiagramm einer ersten-Ausführungsform des erfindungsgemäßen Datenübertragungsverfahrens,
- Figur 3: die Erzeugung von Daten als Grundlage für die Schlüsselerzeugung aus einem Messwert,
- Figur 4: ein Blockdiagramm einer weiteren bevorzugten Ausführungsform eines erfindungsgemäßen Kommunikationssystems,
- Figur 5: ein Blockdiagramm einer bevorzugten Ausführungsform eines erfindungsgemäßen Automatisierungssystems.

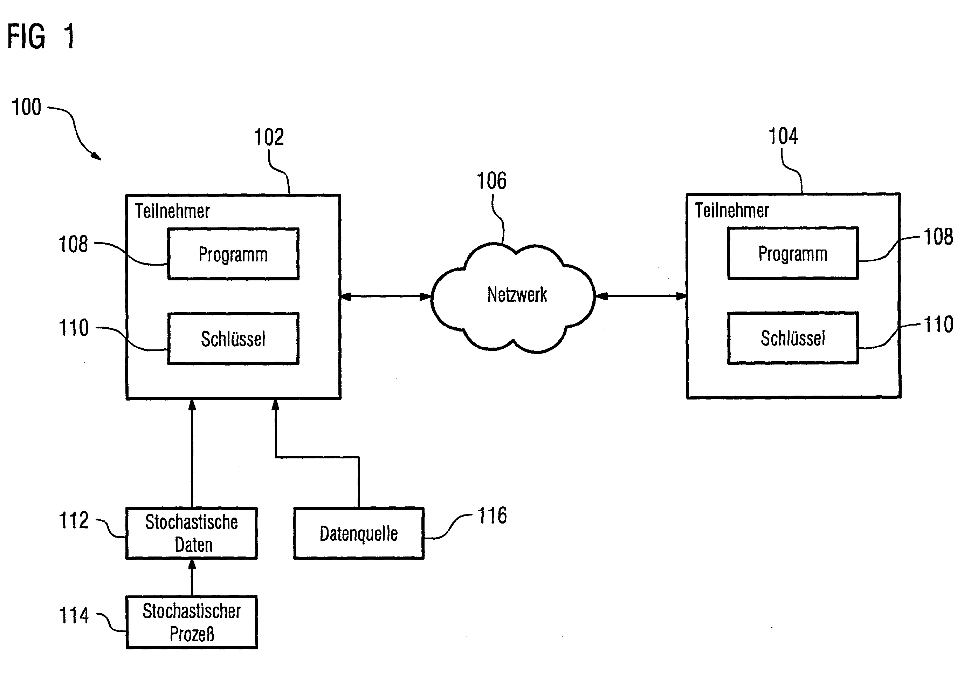

Figur 1 zeigt ein Kommunikationssystem 100, in dem zumindest Teilnehmer 102 und 104 über ein Netzwerk 106 Daten austauschen können. In einer praktischen Ausführungsform kann das Kommunikationssystem 100 eine Vielzahl von solchen Teilnehmern beinhalten.

Die Teilnehmer 102, 104 des Kommunikationssystems 100 haben jeweils ein Programm 108 für ein symmetrisches Verschlüsselungsverfahren. Mit Hilfe der Programme 108 können auf der Grundlage von Eingabedaten symmetrische Schlüssel gebildet werden, sowie zu übertragende Nutzdaten verschlüsselt und entschlüsselt werden.

Die Teilnehmer 102, 104 haben ferner jeweils einen Speicher 110 zur Speicherung des durch das jeweilige Programm 108 generierten symmetrischen Schlüssels.

Der Teilnehmer 102 ist mit einem Erfassungsmodul 112 verbunden; das Erfassungsmodul 112 dient zur Erfassung von stochastischen Daten aus einem stochastischen Prozess 114. Bei dem stochastischen Prozess 114 kann es sich beispielsweise um das Spannungssignal eines rauschenden Widerstandes handeln.

Ferner ist der Teilnehmer 102 mit einer Datenquelle 116 verbunden. Von der Datenquelle 116 gelieferte Daten sollen von dem Teilnehmer 102 über das Netzwerk 106 zu dem Teilnehmer 104 übertragen werden.

Beim Betrieb des Kommunikationssystems 100 werden von dem Erfassungsmodul 112 stochastische Daten aus dem stochastischen Prozess 114 erfasst. Die stochastischen Daten werden in den Teilnehmer 102 eingegeben. Die stochastischen Daten werden von dem Teilnehmer 102 über das Netzwerk 106 an den Teilnehmer 104 übertragen. Dies kann verschlüsselt oder unverschlüsselt erfolgen.

In dem Teilnehmer 102 wird das Programm 108 gestartet, um auf der Grundlage der von dem Erfassungsmodul 112 gelieferten stochastischen Daten einen symmetrischen Schlüssel zu erzeugen, der in dem Speicher 110 gespeichert wird. Entsprechend wird das Programm 108 in dem Teilnehmer 104 gestartet, um die von dem Teilnehmer 102 über das Netzwerk 106 empfangenen stochastischen Daten zur Erzeugung desselben symmetrischen Schlüssels zu verwenden, der in dem Speicher 110 des Teilnehmers 104 gespeichert wird.

Wenn weitere Teilnehmer in dem Kommunikationssystem 100 vorhanden sind, erhalten auch die weiteren Teilnehmer die stochastischen Daten von dem Teilnehmer 102 über das Netzwerk 106 und erzeugen jeweils lokal den symmetrischen Schlüssel mit Hilfe des jeweiligen Programms 108.

Daten, die von der Datenquelle 116 an den Teilnehmer 102 geliefert werden, können nun verschlüsselt über das Netzwerk 106 zu dem Teilnehmer 104 übertragen werden. Hierzu werden die zu übertragenden Nutzdaten mit Hilfe des Programms 108 des Teilnehmers 102 und des in dem Speicher 110 des Teilnehmers 102 gespeicherten symmetrischen Schlüssels verschlüsselt.

Die verschlüsselten Nutzdaten werden über das Netzwerk 106 übertragen und von dem Teilnehmer 104 empfangen. Dort werden die Daten von dem Programm 108 des Teilnehmers 104 mit Hilfe des in dem Speicher 110 des Teilnehmers 104 gespeicherten symmetrischen Schlüssels entschlüsselt.

Die Erzeugung der stochastischen Daten als Grundlage für die Erzeugung der symmetrischen Schlüssel in den Teilnehmern 102, 104 kann dabei durch einen stochastischen Zufallszahlengenerator erfolgen, der z. B. die Ausgangsspannung eines rauschenden Widerstandes als stochastischen Prozess verwendet.

Alternativ können auch die von der Datenquelle 116 gelieferten Daten als stochastische Daten als Grundlage für die Erzeugung der symmetrischen Schlüssel verwendet werden. Dies ist insbesondere dann vorteilhaft, wenn die Datenquelle 116 Messwerte von zeitlich veränderlichen Größen oder Parametern, beispielsweise eines Automatisierungssystems, liefert. Beispielsweise sind bestimmte Prozessparameter in einem solchen Automatisierungssystem wie die Temperatur, Druck, Drehzahl, etc. nicht deterministisch, sondern mehr oder weniger zufällig mit mehr oder weniger periodischen Komponenten. Ein entsprechender von der Datenquelle 116 gelieferter Messwert kann also als stochastisches Datum für die symmetrische Schlüsselerzeugung verwendet werden, wobei sich in diesem Fall ein separates Erfassungsmodul 112 bzw. ein zusätzlicher stochastischer Prozess 114 erübrigen.

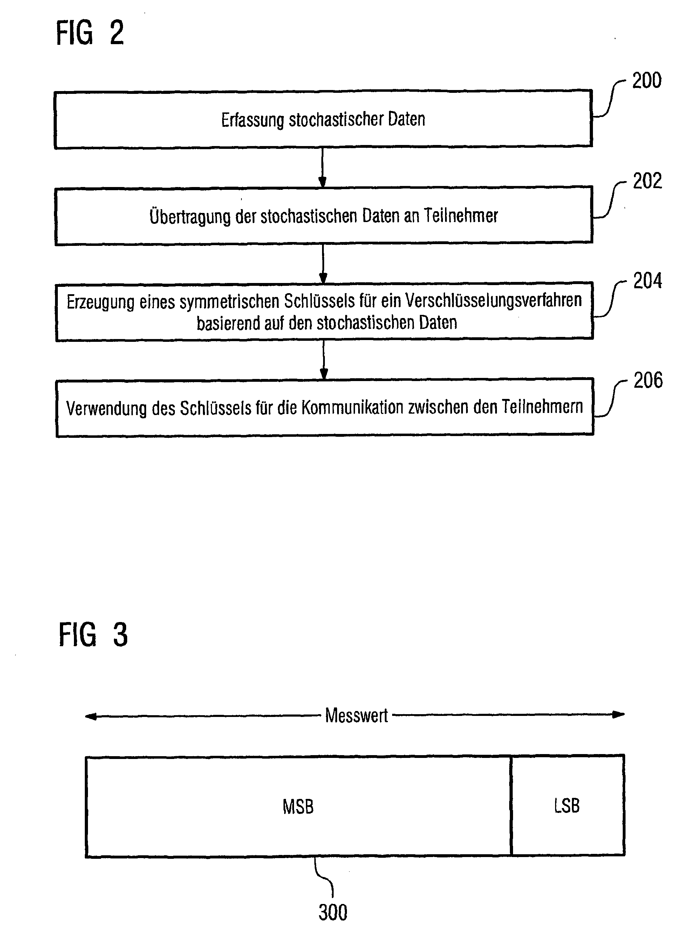

Die Figur 2 zeigt ein entsprechendes Flussdiagramm. In dem Schritt 200 werden stochastische Daten erfasst. Hierbei kann es sich um von einen Zufallsgenerator gelieferte stochastische Daten handeln oder um die Nutzdaten, die von einer Datenquelle geliefert werden. In dem Schritt 202 werden die stochastischen Daten an die Teilnehmer des Kommunikationssystems übertragen. Dies kann verschlüsselt oder unverschlüsselt über ein öffentliches Netzwerk erfolgen.

In dem Schritt 204 werden durch die Teilnehmer auf der Basis der stochastischen Daten jeweils identische symmetrische Schlüssel lokal erzeugt. Hierzu dient ein geheimes Verschlüsselungsverfahren, welches in den Teilnehmern jeweils durch ein Computerprogramm implementiert ist.

Jeder der Teilnehmer, der die stochastischen Daten in dem Schritt 202 empfangen hat, gibt also diese stochastischen Daten in das Computerprogramm ein, um einen symmetrischen Schlüssel zu erzeugen, der von dem jeweiligen Teilnehmer lokal abgespeichert wird.

Im Ergebnis verfügen also alle Teilnehmer über den symmetrischen Schlüssel, ohne dass dieser über das Netzwerk 106 übertragen worden ist. Auch durch Ausspähung der Übertragung der stochastischen Daten über das Netzwerk 106 kann ein Dritter nicht in den Besitz des Schlüssels kommen, da hierfür das geheime Verschlüsselungsverfahren, bzw. das entsprechende Computerprogramm erforderlich ist. Um unauthorisierte Zugriffe auf das Computerprogramm zu vermeiden, ist dies vorzugsweise in einem geschützten Speicherbereich, beispielsweise in einem EPROM oder auf einer Chipkarte gespeichert.

Nachdem die identischen symmetrischen Schlüssel basierend auf den stochastischen Daten in den einzelnen Teilnehmern erzeugt worden sind, werden diese Schlüssel für die geschützte Kommunikation zwischen den Teilnehmern in dem Schritt 206 verwendet.

Die Figur 3 zeigt ein Ausführungsbeispiel für die Erzeugung stochastischer Daten als Grundlage für die Generierung der symmetrischen Schlüssel. Beispielsweise wird von der Datenquelle 116 (vergleiche Figur 1) ein Messwert 300 geliefert, der beispielsweise eine Länge von 32 Bit hat. Beispielsweise werden nur die acht niederwertigsten Bitpositionen ("Least significant bits" - LSB) des Messwertes 300 für die Schlüsselgenerierung verwendet.

Mit anderen Worten bilden also die niederwertigsten Bit-positionen des Messwertes 300 die stochastischen Daten, welche für die Schlüsselerzeugung verwendet werden. Die Verwendung nur der niederwertigsten Bitpositionen des Messwertes 300 hat dabei gegenüber der Verwendung des vollständigen Messwertes 300 oder nur der höchstwertigen Bitpositionen ("Most significant bits" - MSB) den Vorteil, dass periodische Anteile des Messsignals reduziert oder eliminiert werden.

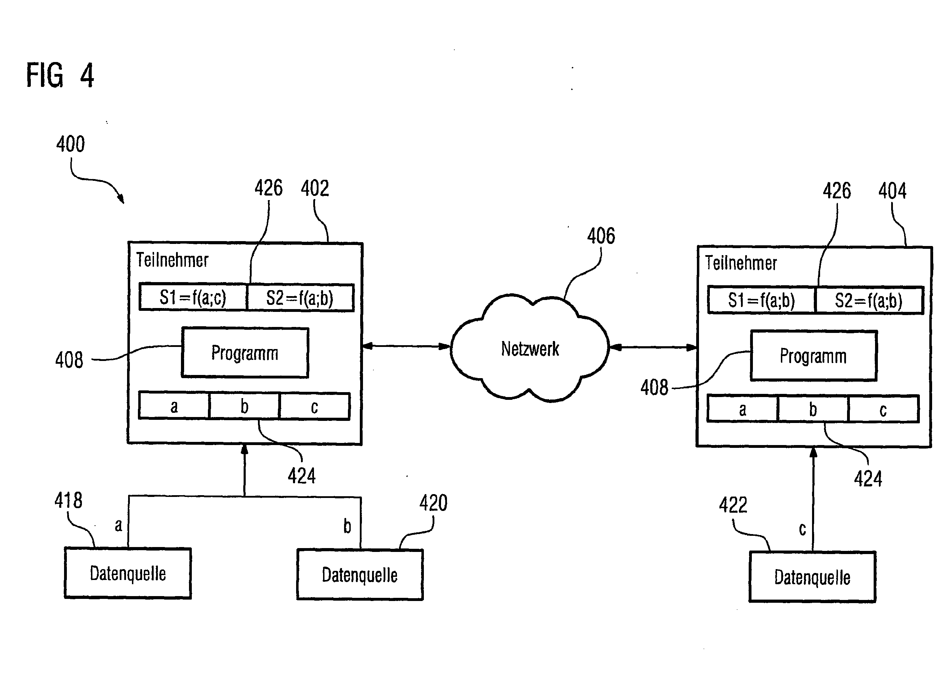

Die Figur 4 zeigt ein Blockdiagramm eines Kommunikationssystems 400. Elemente der Figur 4, die Elementen der Ausführungsform der Figur 1 entsprechen, sind mit um 300 erhöhten Bezugszeichen gekennzeichnet.

Bei der Ausführungsform der Figur 4 ist der Teilnehmer 402 mit den Datenquellen 418 und 420 verbunden, die fortlaufend die Messwerte a und b liefern. Der Teilnehmer 404 ist mit der Datenquelle 422 verbunden, die fortlaufend den Messwert c liefert. Bei dem Messwert a handelt es sich z. B. eine Temperatur, bei dem Messwert b um eine Drehzahl und bei dem Messwert c um einen Druck.

Die Teilnehmer 402 und 404 haben jeweils einen Speicher 424 zur Speicherung der Messwerte a, b und c. Ferner haben die Teilnehmer 402 und 404 jeweils einen Speicher 426 zur Speicherung der symmetrischen Schlüssel S1 und S2. Der Schlüssel S1 wird von dem Programm 408 auf der Grundlage einer Kombination der Messwerte a und c und der Schlüssel S2 auf der Grundlage der Messwerte a und b erzeugt.

Beim Betrieb des Kommunikationssystems 400 werden die symmetrischen Schlüssel S1 und S2 in den Teilnehmern 402 und 404 sowie in weiteren grundsätzlich gleich aufgebauten Teilnehmern erzeugt.

Hierzu werden die zu einem bestimmten Zeitpunkt von den Datenquellen 418, 420, 422 abgegebenen Messwerte a, b bzw. c in den Speicher 424 gespeichert. Das heißt, der Teilnehmer 402 speichert in seinem Speicher 424 die Messwerte a und b und überträgt diese über das Netzwerk 406 zu den weiteren Teilnehmern, d. h. insbesondere zu Teilnehmer 404, wo die Messwerte a und b ebenfalls in dem Speicher 424 gespeichert werden.

Andererseits speichert Teilnehmer 404 den Messwert c in seinem Speicher 424 und überträgt den Messwert c über das Netzwerk 406 an die anderen Teilnehmer, d. h. insbesondere an Teilnehmer 402, wo der Messwert c ebenfalls in dem jeweiligen Speicher 424 gespeichert wird. Wie mit Bezugnahme auf die Figur 3 erläutert, werden vorzugsweise anstelle der vollständigen Messwerte nur die niederwertigsten Bitpositionen in den Speichern 424 gespeichert.

Das Programm 408 des Teilnehmers 402 kombiniert die Messwerte a und b, die in dem Speicher 424 gespeichert sind, bzw. die niederwertigsten Bitpositionen dieser Messwerte, miteinander, indem die entsprechenden Bits beispielsweise aneinander gehängt werden. Das hieraus resultierende Datenwort wird von dem Programm 408 dazu verwendet, den Schlüssel S2 zu erzeugen.

Entsprechend wird auf der Grundlage der Messwerte a und c mit Hilfe des Programms 408 der Schlüssel S1 erzeugt. Die Schlüssel S1 und S2 werden in dem Speicher 426 des Teilnehmers 402 gespeichert. Der prinzipiell gleiche Vorgang läuft in dem Teilnehmer 404 sowie den weiteren Teilnehmern des Kommunikationssystems 400 ab, sodass in sämtlichen Teilnehmern die Schlüssel S1 und S2 vorhanden sind.

Im Weiteren erfolgt eine verschlüsselte Übertragung der Messwerte a, b und c über das Netzwerk 406, wobei zu bestimmten Zeitpunkten der Schlüssel S1 und zu bestimmten Zeitpunkten der Schlüssel S2 für die verschlüsselte Datenübertragung benutzt wird. Diese Zeitpunkte können vordefiniert oder ereignisgesteuert sein. Beispielsweise kann einer der Teilnehmer die Funktion eines Master-Teilnehmers für die Initiierung der Schlüsselerzeugung oder die Umschaltung zwischen den Schlüsseln in den verschiedenen Teilnehmern haben.

Bei dem hier betrachteten Ausführungsbeispiel werden also aus den Messwerten a, b und c durch eine vorgegebene Kombinatorik verschiedene Datenworte gebildet, die ihrerseits die Grundlage zur Erzeugung verschiedener symmetrischer Schlüssel sind. Diese Kombinatorik kann zeitlich unveränderlich sein oder zeitlich veränderlich.

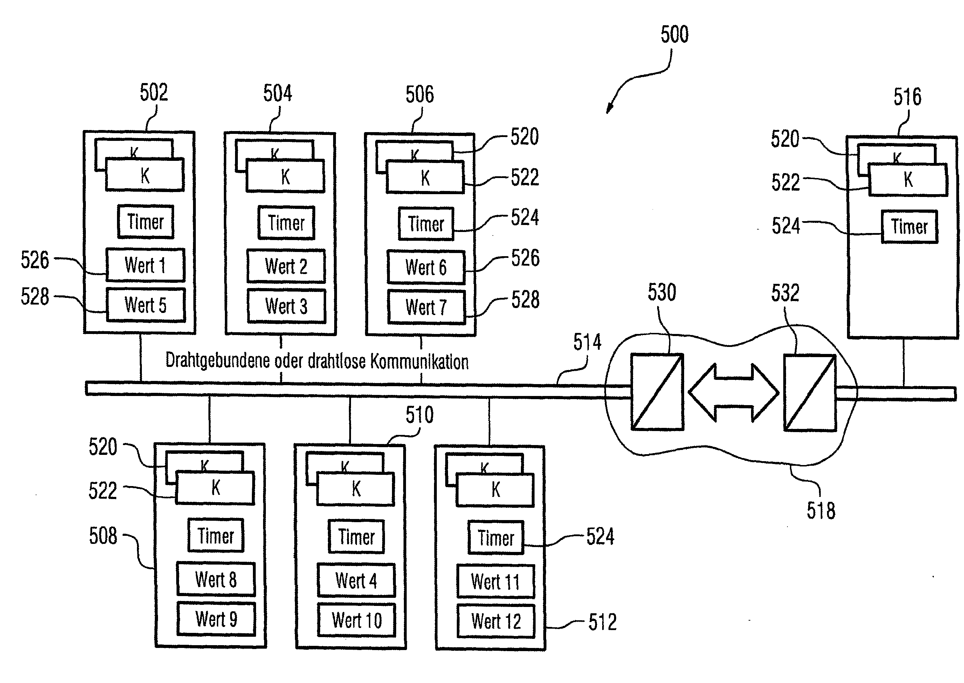

Die Figur 5 zeigt ein Automatisierungssystem 500 mit den Automatisierungsgeräten 502, 504, 506, 508, 510 und 512. Die Automatisierungsgeräte 502 bis 512 sind mit einem Datenbus 514 untereinander verbunden. Hierbei kann es sich z. B. um ein Ethernet handeln. Ein weiteres Automatisierungsgerät 516 kann über ein öffentliches Netzwerk 518 wie z. B. das Internet oder eine drahtlose Mobilfunkverbindung Daten austauschen.

Jedes der Automatisierungsgeräte 502 bis 512 und 516 hat ein Verschlüsselungsprogramm 520 und ein Verschlüsselungsprogramm 522. Darüber hinaus können weitere Verschlüsselungsprogramme vorhanden sein. Die Verschlüsselungsprogramme 520 und 522 stellen jeweils unterschiedliche symmetrische Verschlüsselungsverfahren zur Verfügung.

Ferner haben die Automatisierungsgeräte 502 bis 512 und 516 jeweils einen Timer 524. Die Timer 524 sind miteinander synchronisiert, sodass eine für das Automatisierungssystem 500 einheitliche synchrone Zeitbasis geschaffen wird.

Jedes der Automatisierungsgeräte 502 bis 512 hat ferner einen Speicher 526 und einen Speicher 528. Der Speicher des Automatisierungsgerätes 502 dient zur Speicherung des "Wert 1", der von einem entsprechenden Messwertgeber 1 ausgegeben wird. Der Speicher 528 des Automatisierungsgerätes 502 dient zur Speicherung des "Wert 5", der von einem Messwertgeber 5 ausgegeben wird. Entsprechend verhält es sich für die Speicher 526 und 528 der weiteren Automatisierungsgeräte 504 bis 512, die jeweils bestimmten Messwertgebern zugeordnet sind, wie aus der Figur 5 ersichtlich. Die Messwertgeber sind in der Fig. 5 der Übersichtlichkeit halber nicht dargestellt.

Das Datenwort, welches als Grundlage zur Erzeugung eines symmetrischen Schlüssels dient, wird durch eine vorgegebene Kombinatorik erzeugt, beispielsweise aus der Verkettung der Werte 1, 2, 3 und 4. Das durch diese Verkettung erhaltene Datenwort wird jeweils in die Verschlüsselungsprogramme 520 und 522 eingegeben, um entsprechende symmetrische Schlüssel zu erzeugen.

Für die verschlüsselte Datenübertragung zwischen den Automatisierungsgeräten 502 bis 512 und 516 werden die Verschlüsselungsprogramme 520 und 522 in einer vorprojektierten zeitlichen Reihenfolge verwendet, d. h. für jeden Zeitpunkt ist vorprojektiert, ob das Verschlüsselungsprogramm 520 oder 522 für die verschlüsselte Datenübertragung zu verwenden ist.

Bei dem Automatisierungsgerät 516 handelt es sich beispielsweise um ein Fernwartungsgerät. Auch das Automatisierungsgerät 516 erhält die Messwerte 1, 2, 3 und 4 über das Netzwerk 518, um mit Hilfe der Verschlüsselungsprogramme 520 und 522 die jeweiligen Schlüssel zu bilden. Die Übertragung der Messwerte von den Automatisierungsgeräten 502, 504 und 510 erfolgt dabei über den Datenbus 514 und das Netzwerk 518 zu dem Automatisierungsgerät 516. Nachdem die Schlüsselbildung erfolgt ist, kann von dem Automatisierungsgerät 516 eine Fernwartung durchgeführt werden, wobei die hierbei über das Netzwerk 518 übertragenen Daten gegen Ausspähung und Manipulation geschützt sind.

Das Netzwerk hat die Netzzugänge 530 und 532, über die der Datenverkehr zwischen dem Datenbus 514 und dem Automatisierungsgerät 516 erfolgt. Bei der Übertragung über das Netzwerk 518 kann eine weitere Verschlüsselung vorgenommen werden, indem die bereits verschlüsselten Daten nochmals verschlüsselt werden. Hierdurch wird die Sicherheit gegen Angriffe von außen weiter erhöht.

Dies ist insbesondere vorteilhaft, wenn es sich bei dem Netzwerk 518 um ein öffentliches Netz handelt. Die weitere Verschlüsselung für die Übertragung über das Netzwerk 518 kann analog zu der Figur 1 erfolgen, wobei der Netzzugang 530 die Rolle des Teilnehmer 102 und der Netzzugang 532 die Rolle des Teilnehmers 104 einnimmt.

Von besonderem Vorteil ist, dass die geschützte Datenübertragung zwischen den Automatisierungsgeräten unabhängig von allgemeinen Sicherheitsinfrastrukturen, wie z. B. von zentralen Trustzentren, erfolgt, sondern auf zeitlich veränderlichen Daten, die aus der Anlage selber herrühren, beruht. Von weiterem Vorteil ist, dass aufgrund der geheimen Verschlüsselungsprogramme 520, 522 auch eine implizite Authentifizierung der Automatisierungsgeräte erfolgt. Nicht autorisierte Automatisierungsgeräte, für die die Anlage nicht zugelassen ist, oder Automatisierungsgeräte von Fremdherstellern, die nicht über die erforderlichen Lizenzen verfügen, haben nicht die geheimen Verschlüsselungsprogramme 520, 522 und können daher auch nicht in dem Automatisierungssystem eingesetzt werden.

Zur weiteren Erhöhung der Sicherheit kann in den einzelnen Automatisierungsgeräten jeweils eine Liste von Verschlüsselungsprogrammen geladen werden. Vorzugsweise erfolgt das Laden dieser Verschlüsselungsprogramme im Offlinebetrieb des Automatisierungssystems, um ein Ausspähen der Verschlüsselungsprogramme zu vermeiden. Beispielsweise werden die Verschlüsselungsprogramme in geschützten Speicherbereichen von EPROMs oder Chipkarten gespeichert.

Die Wechselzeitpunkte für den Wechsel der Verschlüsselungsprogramme und der dazugehörigen Schlüssel können kommandogesteuert von einem der Automatisierungsgeräte bestimmt werden, welches damit die Funktion eines Masters einnimmt. Alternativ können die Wechselzeitpunkte durch vorgegebene absolute Zeitpunkte projektiert sein oder zyklisch bzw. periodisch erfolgen.

Alternativ kann auch ein von Zufallswerten der Anlage gespeister Algorithmus für die Festlegung der Wechselzeitpunkte verwendet werden. Eine weitere Möglichkeit ist, dass eine Auslastung des Datenbusses 514 überwacht wird und die Schlüsselerzeugung bzw. der Wechsel der Verschlüsselungsprogramme zu einem Zeitpunkt initiiert wird, zu dem die Auslastung des Datenbusses 514 gering ist. Dies hat den Vorteil, dass ungenutzte Bandbreite des Datenbusses 514 für die Übertragung der Messwerte zu den einzelnen Automatisierungsgeräten verwendet werden kann.

## Patentansprüche

1. Verfahren zur Datenübertragung mit folgenden Schritten:
- Eingabe von ersten Daten aus einem stochastischen Prozess (114) in zumindest erste und zweite Teilnehmer (102, 104; 402, 404; 502, 504, 506, 508, 510, 512, 516) eines Kommunikationsnetzes (100, 106; 400, 406; 500, 514, 518),
- in jedem der zumindest ersten und zweiten Teilnehmer: Erzeugung eines symmetrischen Schlüssels (S1, S2), basierend auf den ersten Daten und Speicherung des symmetrischen Schlüssels für eine verschlüsselte Datenübertragung zwischen den zumindest ersten und zweiten Teilnehmern,
**dadurch gekennzeichnet,**
**dass** jeder der zumindest ersten und zweiten Teilnehmer über Mittel (108; 408) für zumindest ein erstes und ein zweites Verschlüsselungsverfahren zur Schlüsselerzeugung verfügt, wobei basierend auf den ersten Daten jeweils erste bzw. zweite symmetrische Schlüssel erzeugt werden, und dass für die verschlüsselte Datenübertragung in zeitlicher Reihenfolge zwischen den besagten ersten und zweiten Verschlüsselungsverfahren zur Schlüsselerzeugung gewechselt wird.

2. Verfahren nach Anspruch 1, wobei zur Erzeugung der ersten und zweiten Schlüssel in jedem der zumindest ersten und zweiten Teilnehmer verschiedene erste Daten durch unterschiedliche Kombinatorik der stochastischen Daten gebildet werden.

3. Verfahren nach Anspruch 1 oder 2, wobei die ersten Daten über das Kommunikationsnetz (100, 106; 400, 406; 500, 514, 518) übertragen werden.

4. Verfahren nach einem der vorhergehenden Ansprüche, wobei die ersten Daten durch Erfassung von mindestens einem Messwert aus dem stochastischen Prozess (114) gewonnen werden.

5. Verfahren nach einem der vorhergehenden Ansprüche, wobei es sich bei dem stochastischen Prozess um einen zeitlich veränderlichen Parameter eines Automatisierungssystems (500) handelt.

6. Verfahren nach einem der vorhergehenden Ansprüche, wobei die ersten Daten aus niedersignifikanten Bit-Positionen (LSB) eines oder mehrerer Messwerte gewonnen werden.

7. Verfahren nach einem der vorhergehenden Ansprüche, wobei jeder der zumindest ersten und zweiten Teilnehmer stochastische Daten erfasst, aus denen die ersten Daten gebildet werden.

8. Verfahren nach Anspruch 7, wobei die ersten Daten aus den stochastischen Daten durch eine vorgegebene Kombinatorik gebildet werden.

9. Verfahren nach Anspruch 7 oder 8, wobei die stochastischen Daten über das Kommunikationsnetz (100, 106; 400, 406; 500, 514, 518) übertragen werden.

10. Verfahren nach einem der vorhergehenden Ansprüche, wobei die Erzeugung des symmetrischen Schlüssels in den Teilnehmern auf Anforderung eines Master-Teilnehmers des Kommunikationsnetzes erfolgt.

11. Verfahren nach einem der vorhergehenden Ansprüche, wobei die Erzeugung des symmetrischen Schlüssels zu vorbestimmten Zeitpunkten oder nach vorbestimmten Zeitintervallen in den zumindest ersten und zweiten Teilnehmern erfolgt.

12. Verfahren nach einem der vorhergehenden Ansprüche, wobei die Übertragung der ersten Daten oder der stochastischen Daten zu einem Zeitpunkt geringer Auslastung des Kommunikationsnetzes erfolgt.

13. Verfahren nach einem der vorhergehenden Ansprüche, wobei die Übertragung der ersten Daten oder der stochastischen Daten mit einem asymmetrischen Verschlüsselungsverfahren erfolgt.

14. Computerprogrammprodukt, insbesondere digitales Speichermedium, mit Programmmitteln zur Durchführung der folgenden Schritte:
- Eingabe von ersten Daten aus einem stochastischen Prozess (114) in zumindest erste und zweite Teilnehmer (102, 104; 402, 404; 502, 504, 506, 508, 510, 512, 516) eines Kommunikationsnetzes (100, 106; 400, 406; 500, 514, 518),
- in jedem der zumindest ersten und zweiten Teilnehmer: Erzeugung eines symmetrischen Schlüssels (S1, S2), basierend auf den ersten Daten und Speicherung des symmetrischen Schlüssels für eine verschlüsselte Datenübertragung zwischen den zumindest ersten und zweiten Teilnehmern,
**dadurch gekennzeichnet,**
**dass** jeder der zumindest ersten und zweiten Teilnehmer über Mittel (108; 408) für zumindest ein erstes und ein zweites Verschlüsselungsverfahren zur Schlüsselerzeugung verfügt, wobei basierend auf den ersten Daten jeweils erste bzw. zweite symmetrische Schlüssel erzeugt werden, und dass für die verschlüsselte Datenübertragung in zeitlicher Reihenfolge zwischen den besagten ersten und zweiten Verschlüsselungsverfahren zur Schlüsselerzeugung gewechselt wird.

15. Computerprogrammprodukt nach Anspruch 14, wobei die ersten Daten durch Erfassung eines Messwerts aus dem stochastischen Prozess (114) gewonnen werden.

16. Computerprogrammprodukt nach Anspruch 14 oder 15, wobei die ersten Daten aus niedersignifikanten Bit-Positionen (LSB) eines oder mehrerer Messwerte gewonnen werden.

17. Kommunikationssystem mit zumindest ersten und zweiten Teilnehmern (102, 104; 402, 404; 502, 504, 506, 508, 510, 512, 516) und einem Kommunikationsnetz (100, 106; 400, 406; 500, 514, 518) für eine Datenübertragung zwischen den zumindest ersten und zweiten Teilnehmern, und mit:
- Mitteln (112) zur Eingabe von ersten Daten aus einem stochastischen Prozess (114) in die zumindest ersten und zweiten Teilnehmer,
- in jedem der zumindest ersten und zweiten Teilnehmer: Mittel (108; 408) zur Erzeugung eines symmetrischen Schlüssels basierend auf den ersten Daten und Mittel (110; 426; 520, 522) zur Speicherung des symmetrischen Schlüssels für eine verschlüsselte Datenübertragung zwischen den zumindest ersten und zweiten Teilnehmern,
**dadurch gekennzeichnet,**
**dass** jeder der zumindest ersten und zweiten Teilnehmer über Mittel (108; 408) für zumindest ein erstes und ein zweites Verschlüsselungsverfahren zur Schlüsselerzeugung verfügt, wobei basierend auf den ersten Daten jeweils erste bzw. zweite symmetrische Schlüssel erzeugt werden, und dass für die verschlüsselte Datenübertragung in zeitlicher Reihenfolge zwischen den besagten ersten und zweiten Verschlüsselungsverfahren zur Schlüsselerzeugung gewechselt wird.

18. Kommunikationssystem nach Patentanspruch 17, wobei es sich bei dem Kommunikationsnetz (100, 106; 400, 406; 500, 514, 518) um ein öffentliches Netz handelt.

19. Kommunikationssystem nach Patentanspruch 17 oder 18, wobei es sich bei dem Kommunikationsnetz (100, 106; 400, 406; 500, 514, 518) um das Internet handelt und ein Teilnehmer als Master-Teilnehmer ausgebildet ist, um eine Schlüsselerzeugung in den anderen Teilnehmern durch Übertragung einer entsprechenden Anforderung über das Internet auszulösen.

20. Kommunikationssystem nach Anspruch 17 oder 18, wobei es sich bei dem Kommunikationsnetz (100, 106; 400, 406; 500, 514, 518) um ein Ethernet handelt.

21. Kommunikationssystem nach Anspruch 20, wobei einer der Teilnehmer als Master-Teilnehmer ausgebildet ist, um auf das Ethernet ein Kommando zur Auslösung der Schlüsselerzeugung in den Teilnehmern auszugeben.

22. Kommunikationssystem nach einem der vorhergehenden Ansprüche 17 bis 21, wobei es sich bei den zumindest ersten und zweiten Teilnehmern um Komponenten eines Automatisierungssystems (500) handelt.

23. Kommunikationssystem nach einem der vorhergehenden Ansprüche 17 bis 22, wobei zumindest einer der Teilnehmer (516) zur Durchführung einer Fernwartung ausgebildet ist.

## Claims

1. Method for data transmission with the following steps:
- input of first data from a stochastic process (114) into at least first and second users (102, 104; 402, 404; 502, 504, 506, 508, 510, 512, 516) of a communications network (100, 106; 400, 406; 500, 514, 518),
- in each of the at least first and second users:
generation of a symmetric key (S1, S2), based on the first data and storage of the symmetric key for encrypted data transmission between the at least first and second users,
**characterized in that**
each of the at least first and second users has means (108; 408) for at least a first and a second encryption method for key generation, whereby, on the basis of the first data, in each case first and second symmetric keys are generated, and a changeover takes place between said first and second encryption methods in a temporal sequence for the key generation and encrypted data transmission.

2. Method according to Claim 1, whereby various first data are formed through different combinations of the stochastic data in order to generate the first and second keys in each of the at least first and second users.

3. Method according to Claim 1 or 2, whereby the first data are transmitted via the communications network (100, 106; 400, 406; 500, 514, 518).

4. Method according to one of the preceding claims, whereby the first data are obtained by recording at least one measurement value from the stochastic process (114).

5. Method according to one of the preceding claims, whereby the stochastic process is a temporally variable parameter of an automation system (500).

6. Method according to one of the preceding claims, whereby the first data are obtained from least significant bits (LSB) of one or more measurement values.

7. Method according to one of the preceding claims, whereby each of the at least first and second users records stochastic data from which the first data are formed.

8. Method according to Claim 7, whereby the first data are formed from the stochastic data by means of predefined combinations.

9. Method according to Claim 7 or 8, whereby the stochastic data are transmitted via the communications network (100, 106; 400, 406; 500, 514, 518).

10. Method according to one of the preceding claims, whereby the symmetric key is generated in the users at the request of a master user of the communications network.

11. Method according to one of the preceding claims, whereby the symmetric key is generated at predefined times or after predefined time intervals in the at least first and second users.

12. Method according to one of the preceding claims, whereby the first data or the stochastic data are transmitted at a time of low utilization of the communications network.

13. Method according to one of the preceding claims, whereby the first data or the stochastic data are transmitted with an asymmetric encryption method.

14. Computer program product, in particular digital storage medium with program means to carry out the following steps:
- input of first data from a stochastic process (114) into at least first and second users (102, 104; 402, 404; 502, 504, 506, 508, 510, 512, 516) of a communications network (100, 106; 400, 406; 500, 514, 518),
- in each of the at least first and second users:
generation of a symmetric key (S1, S2), based on the first data and storage of the symmetric key for encrypted data transmission between the at least first and second users,
**characterized in that**
each of the at least first and second users has means (108; 408) for at least a first and a second encryption method for key generation, whereby, on the basis of the first data, in each case first and second symmetric keys are generated, and a changeover takes place between said first and second encryption methods in a temporal sequence for the key generation and encrypted data transmission.

15. Computer program product according to claim 14, whereby the first data are obtained by recording a measurement value from the stochastic process (114).

16. Computer program product according to Claim 14 or 15, whereby the first data are obtained from least significant bits (MSB) of one or more measurement values.

17. Communications system with at least first and second users (102, 104; 402, 404; 502, 504, 506, 508, 510, 512, 516) and a communications network (100, 106; 400, 406; 500, 514, 518) for data transmission between the at least first and second users, and with:
- means (112) to input first data from a stochastic process (114) into the at least first and second users,
- in each of the at least first and second users:
means (108; 408) to generate a symmetric key based on the first data, and means (110; 426; 520, 522) to store the symmetric key for encrypted data transmission between the at least first and second users,
**characterized in that**
each of the at least first and second users has means (108; 408) for at least a first and a second encryption method for key generation, whereby, on the basis of the first data, in each case first and second symmetric keys are generated, and a changeover takes place in a temporal sequence between said first and second encryption methods for the key generation and encrypted data transmission.

18. Communications system according to Patent Claim 17, whereby the communications network (100, 106; 400, 406; 500, 514, 518) is a public network.

19. Communications system according to Patent Claim 17 or 18, whereby the communications network (100, 106; 400, 406; 500, 514, 518) is the Internet, and a user is set up as a master user in order to initiate a key generation in the other users through transmission of a corresponding request via the Internet.

20. Communications system according to Claim 17 or 18, whereby the communications network (100, 106; 400, 406; 500, 514, 518) is an Ethernet.

21. Communications system according to Claim 20, whereby one of the users is set up as a master user in order to output a command onto the Ethernet to initiate the key generation in the users.

22. Communications system according to one of the preceding Claims 17 to 21, whereby the at least first and second users are components of an automation system (500).

23. Communications system according to one of the preceding Claims 17 to 22, whereby at least one other users (516) is set up to carry out remote maintenance.

## Revendications

1. Procédé de transmission de données comportant les étapes suivantes :
- entrée de premières données provenant d'un processus stochastique (114) dans au moins des premiers et des deuxièmes utilisateurs (102, 104 ; 402, 404 ; 502, 504, 506, 508, 510, 512, 516) d'un réseau de communication (100, 106 ; 400, 406 ; 500, 514, 518),
- dans chacun des premiers et deuxièmes utilisateurs : production d'une clé symétrique (S1, S2) en se basant sur les premières données et mémorisation de la clé symétrique pour une transmission de données cryptée entre les premiers et deuxièmes utilisateurs,
**caractérisé par le fait que** chacun des premiers et deuxièmes utilisateurs dispose de moyens (108 ; 408) pour au moins un premier et un deuxième procédé de cryptage en vue de la production de clés, des premières ou deuxièmes clés symétriques étant produites à chaque fois en se basant sur les premières données, et que l'on bascule dans l'ordre chronologique entre les premiers et deuxièmes procédés de cryptage mentionnés pour la production de clés en vue de la transmission de données cryptée.

2. Procédé selon la revendication 1, dans lequel, pour la production des premières et deuxièmes clés dans chacun des premiers et deuxièmes utilisateurs, différentes premières données sont formées par différentes combinaisons des données stochastiques.

3. Procédé selon la revendication 1 ou 2, dans lequel les premières données sont transmises par l'intermédiaire du réseau de communication (100, 106; 400, 406 ; 500, 514, 518).

4. Procédé selon l'une des revendications précédentes, dans lequel les premières données sont obtenues en détectant au moins une valeur mesurée provenant du processus stochastique (114).

5. Procédé selon l'une des revendications précédentes, dans lequel le processus stochastique est un paramètre temporellement variable d'un système d'automatisation (500).

6. Procédé selon l'une des revendications précédentes, dans lequel les premières données sont obtenues à partir de positions binaires de poids faible (LSB) d'une ou plusieurs valeurs mesurées.

7. Procédé selon l'une des revendications précédentes, dans lequel chacun des premiers et deuxièmes utilisateurs détecte des données stochastiques à partir desquelles les premières données sont formées.

8. Procédé selon la revendication 7, dans lequel les premières données sont formées à partir des données stochastiques par une combinaison prédéterminée.

9. Procédé selon la revendication 7 ou 8, dans lequel les données stochastiques sont transmises par l'intermédiaire du réseau de communication (100, 106; 400, 406 ; 500, 514, 518).

10. Procédé selon l'une des revendications précédentes, dans lequel la production de la clé symétrique dans les utilisateurs s'effectue à la demande d'un utilisateur maître du réseau de communication.

11. Procédé selon l'une des revendications précédentes, dans lequel la production de la clé symétrique s'effectue à des instants prédéterminés ou après des intervalles de temps prédéterminés dans les premiers et deuxièmes utilisateurs.

12. Procédé selon l'une des revendications précédentes, dans lequel la transmission des premières données ou des données stochastiques s'effectue à un moment où le réseau de communication est peu chargé.

13. Procédé selon l'une des revendications précédentes, dans lequel la transmission des premières données ou des données stochastiques s'effectue avec un procédé de cryptage asymétrique.

14. Produit de programme informatique, notamment support de mémoire numérique, avec des moyens formant programmes pour la mise en oeuvre des étapes suivantes:
entrée de premières données provenant d'un processus stochastique (114) dans au moins des premiers et deuxièmes utilisateurs (102, 104 ; 402, 404 ; 502, 504, 506, 508, 510, 512, 516) d'un réseau de communication (100, 106 ; 400, 406 ; 500, 514, 518),
- dans chacun des premiers et deuxièmes utilisateurs: production d'une clé symétrique (S1, S2) en se basant sur les premières données et mémorisation de la clé symétrique pour une transmission de données cryptée entre les premiers et deuxièmes utilisateurs,
**caractérisé par le fait que** chacun des premiers et deuxièmes utilisateurs dispose de moyens (108 ; 408) pour au moins un premier et un deuxième procédé de cryptage en vue de la production de clés, des premières ou deuxièmes clés symétriques étant produites à chaque fois en se basant sur les premières données, et que l'on bascule dans l'ordre chronologique entre les premiers et deuxièmes procédés de cryptage mentionnés pour la production de clés en vue de la transmission de données cryptée.

15. Produit de programme informatique selon la revendication 14, dans lequel les premières données sont obtenues en détectant une valeur mesurée provenant du processus stochastique (114).

16. Produit de programme informatique selon la revendication 14 ou 15, dans lequel les premières données sont obtenues à partir de positions binaires de poids faible (LSB) d'une ou plusieurs valeurs mesurées.

17. Système de communication comportant au moins des premiers et des deuxièmes utilisateurs (102, 104 ; 402, 404 ; 502, 504, 506, 508, 510, 512, 516) et un réseau de communication (100, 106 ; 400, 406 ; 500, 514, 518) pour une transmission de données entre les premiers et deuxièmes utilisateurs et comportant :
- des moyens (112) pour l'entrée de premières données provenant d'un processus stochastique (114) dans les premiers et deuxièmes utilisateurs,
- dans chacun des premiers et deuxièmes utilisateurs: des moyens (108 ; 408) pour la production d'une clé symétrique en se basant sur les premières données et des moyens (110 ; 426 ; 520, 522) pour la mémorisation de la clé symétrique pour une transmission de données cryptée entre les premiers et deuxièmes utilisateurs,
**caractérisé par le fait que** chacun des premiers et deuxièmes utilisateurs dispose de moyens (108 ; 408) pour au moins un premier et un deuxième procédé de cryptage en vue de la production de clés, des premières ou deuxièmes clés symétriques étant produites à chaque fois en se basant sur les premières données, et que l'on bascule dans l'ordre chronologique entre les premiers et deuxièmes procédés de cryptage mentionnés pour la production de clés en vue de la transmission de données cryptée.

18. Système de communication selon la revendication 17, dans lequel le réseau de communication (100, 106; 400, 406 ; 500, 514, 518) est un réseau public.

19. Système de communication selon la revendication 17 ou 18, dans lequel le réseau de communication (100, 106 ; 400, 406; 500, 514, 518) est Internet et un utilisateur est conçu comme utilisateur maître pour déclencher une production de clé dans les autres utilisateurs en transmettant une demande correspondante par l'intermédiaire d'Internet.

20. Système de communication selon la revendication 17 ou 18, dans lequel le réseau de communication (100, 106 ; 400, 406 ; 500, 514, 518) est un Ethernet.

21. Système de communication selon la revendication 20, dans lequel l'un des utilisateurs est conçu comme utilisateur maître pour délivrer sur l'Ethernet une instruction destinée au déclenchement de la production de clés dans les utilisateurs.

22. Système de communication selon l'une des revendications précédentes 17 à 21, dans lequel les premiers et deuxièmes utilisateurs sont des composants d'un système d'automatisation (500).

23. Système de communication selon l'une des revendications précédentes 17 à 22, dans lequel au moins l'un des utilisateurs (516) est conçu pour la mise en oeuvre d'une télémaintenance.
